# EUROPÄISCHE PATENTSCHRIFT

(11) **EP 3 266 579 B1**
(45) Veröffentlichungstag und Bekanntmachung des Hinweises auf die Patenterteilung: **11.03.2020**
(21) Anmeldenummer: 17176949.0
(22) Anmeldetag: 20.06.2017
(51) Int. Cl.: B29C 33/20, B29C 33/26

(54) **HERSTELLUNGSFORM EINES ROTORBLATTES**
PRODUCTION MOLD OF A ROTOR BLADE
MOULE DE FABRICATION D'UNE PALE DE ROTOR

(30) Priorität: 05.07.2016 DE 102016008125
(43) Veröffentlichungstag der Anmeldung: 10.01.2018
(73) Patentinhaber: Senvion GmbH, 22297 Hamburg (DE)
(72) Erfinder: BENDEL, Urs, 24787 Fockbek (DE)
(74) Vertreter: Groth, Wieland

(56) Entgegenhaltungen:
- EP-A1- 0 050 227
- EP-A1- 3 222 398
- WO-A1-2010/076605
- JP-A- H1 148 254
- JP-A- S61 239 926
- US-A- 2 916 768
- US-A- 4 693 679

## Beschreibung

Die Erfindung betrifft eine Herstellungsform für ein Rotorblatt einer Windenergieanlage.

Herstellungsformen für Rotorblätter von Windenergieanlagen sind im Stand der Technik natürlich hinlänglich bekannt.

Dabei werden gemäß der WO 2010/076605 A1 zwei Formhalbschalen, die auf Gerüsten montiert sind, gegeneinander verschwenkt, bis Ränder der Formhalbschalen übereinander positioniert sind, und in jeder der beiden Formhalbschalen ist eine Rotorblatthalbschale eingelegt. Zwischen den Rotorblatthalbschalen wird auf dem Rand der unteren Rotorblatthalbschale eine Klebmasse aufgebracht. Die beiden Formhalbschalen werden mittels eines angetriebenen Hakens ineinander verhakt, dabei führt der Haken eine kombinierte Dreh- und translatorische Bewegung aus, wobei die beiden Bewegungen miteinander unmittelbar gekoppelt sind.

In dem nachveröffentlichen Stand der Technik EP 3 222 398 A1 ist eine Formwerkzeuganordnung offenbart mit zwei Formhalbschalen, die mittels eines Verschließmechanismus verschließbar sind. Der Verschließmechanismus umfasst eine Kolbenstange und einen Verriegelungskopf und eine Verriegelungsaufnahme, wobei der Verriegelungskopf mittels einer translatorischen Bewegung in die Verriegelungsaufnahme einführbar ist und dann durch eine Drehbewegung verriegelt.

In der JP S61 239926 A ist ein Verschließmechanismus beschrieben, der ebenfalls einen Haken umfasst, der mittels einer translatorischen Bewegung, einer anschließenden Drehbewegung und einer translatorischen Bewegung in die entgegengesetzte Richtung in einen korrespondierenden Haken eingreift.

In der EP 0 050 227 A1 ist eine Vorrichtung zur Herstellung von Hohlkörpern aus thermoplastischen Kunststoffen beschrieben, wobei zwei Halbschalen mittels eines Verschließmechanismus, der einen Keil umfasst, verschließbar sind.

In der WO 2010/103490 A1 ist ein Schließmechanismus für die beiden Formhalbschalen einer Herstellungsform beschrieben, wobei der Verschluss ebenfalls auf einem Hakenmechanismus basiert. Der Haken wiederum ist an einem Zylinder angeordnet, der eine translatorische Bewegung ausführt, so dass der Haken selbst eine kombinierte translatorische und Drehbewegung durchführt, wobei beide Bewegungen voneinander nicht entkoppelt sind. Nachteilig an den beiden beschriebenen Verschlussmechanismen der Herstellungsform ist, dass die beiden Verschlusskomponenten ziemlich genau zueinander positioniert werden müssen, damit der Stift sich in der eindimensionalen Bewegungslinie des Hakens befindet.

Es ist daher in einem ersten Aspekt Aufgabe der vorliegenden Erfindung, eine Herstellungsform der eingangs genannten Art mit einem anderen Verschluss zu versehen, der die oben genannten Nachteile vermeidet.

Es ist in einem zweiten Aspekt Aufgabe der vorliegenden Erfindung, ein Verfahren zur Verfügung zu stellen, durch das eine Herstellungsform eines Rotorblatts einer Windenergieanlage besser verschlossen werden kann.

In dem ersten Aspekt wird die Aufgabe durch eine Herstellungsform mit dem Merkmal des Anspruchs 1 gelöst.

Die Herstellungsform ist zur Herstellung eines Rotorblattes einer Windenergieanlage bestimmt, wobei das Rotorblatt ein Laminatbauteil ist, das zumindest aus zwei Rotorblatthalbschalen aufgebaut ist und jede der Rotorblatthalbschalen in einem Laminierverfahren hergestellt ist, wobei Gewebelagen aus textilem Gewebe und/oder Kunststoffgewebe, mit beispielsweise Kohlefasern, die in bestimmten Richtungen ausgerichtet sind, übereinander gelegt werden. Dabei können zusätzlich Schaumstoffkerne und/oder Balsa verwendet werden. Diese übereinandergelegten Schichten werden anschließend in einem Infusionsverfahren mit einem Harzsystem infundiert, wobei der Begriff der "Infusion" hier allgemein zu verstehen ist und es nicht auf die konkrete Ausgestaltung des Infusionsverfahrens ankommt. Es können aber auch andere Verfahren zur Herstellung eines Bauteils aus Faserverbundwerkstoffen zum Einsatz kommen.

Die Herstellungsform umfasst zwei Formhalbschalen mit jeweils einer offenen Seite, wobei jede der Formhalbschalen auf einer Halteeinrichtung angeordnet ist. Die eine Formhalbschale ist auf der einen Halteeinrichtung, die andere Formhalbschale auf der anderen Halteeinrichtung angeordnet. Die beiden Halteeinrichtungen können gelenkig miteinander verbunden sein. Sie sind zwischen einer geöffneten Stellung, in der die beiden Formhalbschalen mit ihrer offenen Seite nach oben weisen, nebeneinander angeordnet und einer geschlossenen Stellung, in der die beiden Formhalbschalen mit ihrer offenen Seite zueinander weisend übereinander angeordnet sind, hin und her bewegbar. Die Angaben "oben" und "unten" sind hier unter Bezugnahme auf die Erdanziehungskraft zu verstehen.

Erfindungsgemäß weist die Herstellungsform eine Mehrzahl, d. h. wenigstens zwei, drei, vier oder jede höhere Anzahl an zweikomponentigen Verschlüssen auf, deren eine Komponente an der einen Halteeinrichtung und deren andere Komponente an der anderen Halteeinrichtung angeordnet ist. Dabei sind die Komponenten fest an den Halteeinrichtungen montiert, sodass sie auch hohen Belastungen Stand halten können.

Die beiden Komponenten sind vorzugsweise automatisch und mittels wenigstens eines Aktuators miteinander durch wenigstens zwei voneinander entkoppelte Bewegungen einer Komponente bzw. der beiden Komponenten verschließbar und wieder öffenbar. Die Komponenten sind automatisch betätigbar, d. h. sie brauchen nicht manuell betätigt zu werden. Der Verschluss wird von außen elektronisch, pneumatisch, hydraulisch usw. gesteuert, wobei einzelne Schritte des Verschließvorganges für sich separat gesteuert werden können.

Jeder der Verschlüsse weist wenigstens einen Aktuator auf. Die Verschlüsse können auch zwei oder jede höhere Anzahl an Aktuatoren aufweisen. Günstigerweise weist der Verschluss genau einen Aktuator auf. In einer anderen Ausführungsform der Erfindung weist die eine Komponente des Verschlusses genau einen Aktuator und die andere Komponente des Verschlusses genau einen anderen Aktuator auf. Die beiden Aktuatoren sind voneinander beabstandet und vorzugsweise separat steuerbar.

Die wenigstens zwei Bewegungen der Komponenten bzw. der Komponente sind entkoppelt. Sie sind unabhängig voneinander. Jeder der Verschlüsse hat daher insbesondere zwei Freiheitsgrade.

Es ist daher durchaus möglich, dass eine Bewegung der einen Komponente nur ein kurzes Stück weit ausgeführt wird, dann durch ein kurzes Stück einer Bewegung der anderen Komponente ergänzt wird und dann wieder die erste Bewegung ein weiteres Stück weit ausgeführt wird.

Vorzugsweise weist die eine Komponente eine Öse auf, die von einem Aktuator angetrieben ist und die andere Komponente weist einen Bolzen auf, der über einen anderen Aktuator angetrieben ist und in einem geschlossenen Zustand in die Öse eingeführt ist und im geöffneten Zustand aus der Öse herausgezogen ist. Vorzugsweise ist der Bolzen in eine ersten Halterung geführt und berührt im geöffneten Zustand nur die erste Halterung, während er im geschlossenen Zustand durch die Öse hindurch geführt ist und auch in eine zweite Halterung eingeführt ist, die er auch berührt.

In einer anderen Ausführungsform des erfindungsgemäßen Verschlusses weist die eine Komponente einen Ausleger auf, der rotierbar ist, während die andere Komponente eine Auflage aufweist, über die der Ausleger bei zusammengeklappter Herstellungsform drehbar ist. Darüber hinaus ist der Ausleger translatorisch in einer Richtung verfahrbar, wobei die Richtung vom Ausleger zum Aufleger hinweist.

In der bevorzugten Ausführungsform der Erfindung weist der eine oder der andere Aktuator einen in einer Kulisse geführten Stift auf, an dessen freiem Ende die Öse oder der Ausleger angeordnet ist. Unter einer Kulisse kann hier ein Zylinder verstanden werden und unter dem Stift eine Zylinderstange, die durch den Zylinder pneumatisch, hydraulisch angetrieben wird. Es sind jedoch auch elektrische oder anderweitige Antriebe denkbar.

Erfindungsgemäß bilden die beiden Formhalbschalen im geschlossenen Zustand der Herstellungsform einen zwischen ihren Rändern entlang laufenden Spalt aus. Der Spalt erstreckt sich über die gesamte Ausdehnung der beiden übereinander angeordneten Formhalbschalenränder sowohl entlang der Breite als auch entlang der Längsrichtung der Ränder.

In den Formhalbschalen sind Rotorblatthalbschalen gefertigt und weisen ebenfalls jeweils einen Rand auf, der entlang dem Rand der Formhalbschalen verläuft, vorzugsweise fluchten die Ränder der Formhalbschale und die der Rotorblatthalbschale.

Zweckmäßigerweise fluchten alle nebeneinander angeordneten Ränder und besonders bevorzugt fluchten die Ränder überall. Dadurch entspricht der Spalt zwischen den Rändern der Formhalbschalen dem Spalt zwischen den Rändern der Rotorblatthalbschalen an den Stellen, wo die Ränder fluchten.

Ein Klebmittel ist auf die Ränder der Rotorblatthalbschalen aufgebracht, über die die beiden in den Formhalbschalen gefertigten und vorzugsweise bereits ausgehärteten Rotorblatthalbschalen miteinander verklebt werden. Das heißt, die Klebmasse wird auf zumindest einen Rand einer Rotorblatthalbschale aufgebracht, die in der Formhalbschale positioniert ist und die beiden Rotorblatthalbschalen werden entlang ihrer Ränder aufeinander gedrückt.

Gemäß der Erfindung sind an den beiden Halteeinrichtungen Abstandshalter vorgesehen, die im geschlossenen Zustand die beiden Formhalbschalen so weit voneinander beabstanden, dass sich zwischen den Rändern der Rotorblatthalbschalen der Spalt, vorzugsweise reproduzierbar in einer definierten Höhe ausbildet.

Vorzugsweise sind die Abstandshalter als Stempelpaar ausgebildet, wobei jeweils einer der Stempel an einer der Halteeinrichtungen fest montiert ist, so dass er den erforderlichen Zug- und Druckbelastungen standhält. Im geschlossenen Zustand der Herstellungsform liegen die Stempel eines Paares jeweils aufeinander und berühren sich.

Besonders bevorzugt ist die Halteeinrichtung und/oder die andere Halteeinrichtung als Stahlfachwerk ausgebildet. Beim Stahlfachwerk handelt es sich um eine Fachwerkkonstruktion aus Stahlträgern und/oder Stahlrohren.

Die Erfindung wird in ihrem anderen Aspekt durch ein Verfahren mit dem Merkmal des Anspruchs 8 gelöst.

Das Verfahren eignet sich insbesondere zur Durchführung mit einer der oben genannten Herstellungsformen.

In jeder der beiden Formhalbschalen wird jeweils eine Rotorblatthalbschale gefertigt. Nachdem die Rotorblatthalbschalen als Laminatbauteile mit Harz infundiert und/oder zumindest weitgehend ausgehärtet, vorzugsweise vollständig ausgehärtet sind, werden die beiden Formhalbschalen übereinander zusammengeklappt, so dass die Ränder der beiden in den Formhalbschalen befindlichen Rotorblatthalbschalen übereinander positioniert sind.

Günstigerweise wird auf zumindest einen der Ränder der Rotorblatthalbschalen ein Klebmittel vorher aufgebracht, und die beiden Formhalbschalen werden soweit zusammen geklappt, dass sowohl der Rand der einen Rotorblatthalbschale als auch der Rand der anderen Rotorblatthalbschale sich gegenüberliegend auf der Klebmasseschicht aufliegen.

Die beiden Formhalbschalen werden anschließend mit erfindungsgemäßen zweikomponentigen Verschlüssen verschlossen, deren eine Komponente an einer Halteeinrichtung und deren andere Komponente an der anderen Halteeinrichtung angeordnet sind. Die beiden Komponenten jedes Verschlusses werden durch zwei voneinander entkoppelte Bewegungen einer oder beider Komponente miteinander verschlossen.

Vorzugsweise wird eine an der einen Komponente vorgesehene Öse in eine Richtung translatorisch verfahren und ein an der anderen Komponente angeordneter Bolzen wird ebenfalls translatorisch in eine Richtung verfahren bis der Bolzen durch die Öse hindurchragt. Dann wird die Öse vorzugsweise in die entgegengesetzte Richtung translatorisch verfahren. Die Bolzenbewegung und die Bewegungsrichtung der Öse verlaufen vorzugsweise senkrecht zueinander, günstigerweise in etwa senkrecht zueinander, wobei auch ein Winkel von 90° ± 5°, ± 10°, günstigerweise ± 15° zwischen den beiden translatorischen Bewegungen auftreten kann. Die Öse wird soweit translatorisch in die entgegengesetzte Richtung verfahren, bis der von ihr mitgenommene Bolzen hinreichend weit zur Formhalbschale gezogen wird, dass der Spalt zwischen den beiden Rotorblatthalbschalen die vorgegebene Spaltbreite aufweist. Der zusammengedrückte Spalt ist vorzugsweise vollständig von Klebmittel ausgefüllt, sodass eine hinreichend feste Klebverbindung zwischen den Rändern der beiden Rotorblatthalbschalen erzeugt wird.

In einer anderen Ausführungsform des erfindungsgemäßen Verfahrens wird ein an der einen Komponente angeordneter Ausleger rotiert, günstigerweise ist der Ausleger an einer Stange angeordnet, um deren Längsrichtung der Ausleger rotiert wird, bis er über einem an der anderen Komponente angeordneten Aufleger positioniert ist. Nach der Drehung des Auslegers ist der Ausleger vom Aufleger beabstandet, d. h. Ausleger und Aufleger berühren sich nicht, aber Auflageflächen liegen vorzugsweise im Wesentlichen parallel zueinander in einem lichten Abstand voneinander.

Dann wird der Ausleger in die Richtung des Auflegers translatorisch verfahren, bis der Ausleger den Aufleger berührt. Der Ausleger wird vorzugsweise mittels des Aktuators aber noch weiter verfahren, sodass er unter Krafteinwirkung die andere Formhalbschale auf die Formhalbschale bzw. auf den aufgetragenen Kleber presst, solange, bis der Spalt die vorbestimmte Spaltbreite erreicht hat.

Günstigerweise wird das Klebmittel zunächst in einer Schichtdicke von 3 bis 4 cm aufgetragen, während der nach dem Zusammendrücken entstehende Spalt zwischen den beiden Rotorblatthalbschalenrändern nur etwa 1 cm beträgt. Auf der Spaltbreite wird die Klebmittelschicht zusammengedrückt und dabei seitlich aus dem Spalt weggedrückt.

Es sind natürlich auch andere Klebmittelschichtdicken denkbar und möglich, insbesondere kann die Klebmasseschicht auch in Dicken von 4 bis 5 cm oder 5 bis 6 cm aufgetragen werden, während die Spaltbreite nach dem Zusammendrücken etwa 1 bis 1,5 cm oder sogar 2 cm beträgt.

Die Erfindung wird anhand von zwei Ausführungsbeispielen in fünf Figuren beschrieben, dabei zeigen:
- Fig. 1: eine perspektivische Ansicht einer Herstellungsform eines Rotorblattes einer Windenergieanlage,
- Fig. 2a: eine erste Ausführungsform eines Verschlusses der Herstellungsform in Fig. 1 in einem geöffneten Zustand,
- Fig. 2b: den Verschluss in Fig. 2a in einem geschlossenen Zustand,
- Fig. 3a: eine zweite Ausführungsform eines Verschlusses in einer geöffneten Position,
- Fig. 3b: den Verschluss in Fig. 3a mit zusammengeklappter Herstellungsform und in verschlossenem Zustand.

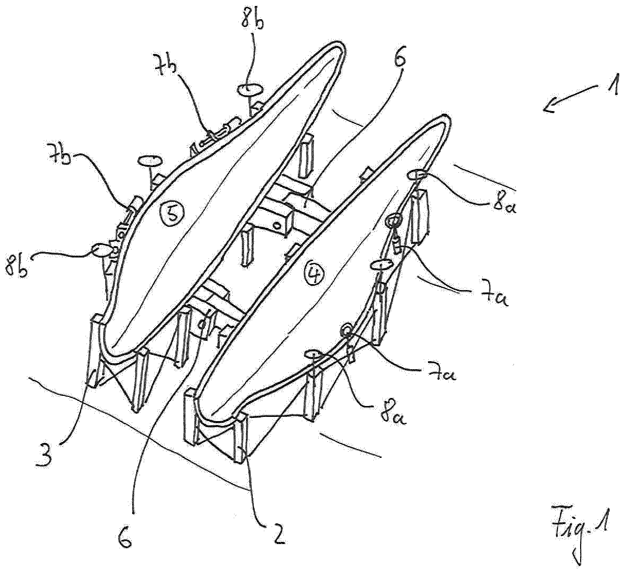

Die in Fig. 1 dargestellte Herstellungsform 1 ist zur Herstellung eines Rotorblattes einer Windenergieanlage bestimmt.

Die Herstellungsform 1 weist in diesem, nicht einschränkend zu verstehenden Beispiel zwei gelenkig miteinander verbundene Stahlfachwerke 2, 3 auf. In jedem der beiden Stahlfachwerke 2, 3 ist jeweils eine Formhalbschale 4, 5 angeordnet. In der Fig. 1 ist das eine vordere rechte Stahlfachwerk 2 positionsfest auf dem Boden einer Montagehalle montiert, während das andere in Fig. 1 obere, linke Stahlfachwerk 3 gelenkig beispielhaft an sieben Gelenken 6 verschwenkbar relativ gegenüber dem einen Stahlfachwerk 2 angeordnet ist. In dem einen Stahlfachwerk 2 ist die eine Formhalbschale 4 und in dem anderen Stahlfachwerk 3 die andere Formhalbschale 5 montiert. Die beiden Formhalbschalen 4, 5 sind mit ihrem jeweiligen Stahlfachwerk 2, 3 verbunden. Die Verbindung erlaubt günstigerweise geringfügige Relativbewegungen aufgrund von unterschiedlichen thermischen Ausdehnungen, ansonsten ist die Verbindung günstigerweise relativ positionsfest. Die eine Formhalbschale 4 ist üblicherweise und bevorzugt zur Herstellung einer Druckseite des Rotorblattes und die andere Formhalbschale 5 ist zur Fertigung der Saugseite des Rotorblattes bestimmt.

Die eine und die andere Haltekonstruktion 2, 3 bestehen beispielsweise aus einem Stahlfachwerk, insbesondere jeweils aus einer Stahlrohrkonstruktion, die beiden Formhalbschalen 4, 5 bestehen beispielsweise jeweils aus Laminatbauteilen. Die beiden Formhalbschalen 4, 5 weisen jeweils eine offene Seite und eine geschlossene Seite auf. In der in der Fig. 1 dargestellten geöffneten Position der Herstellungsform 1 sind die beiden offenen Seiten der beiden Formhalbschalen 4, 5 nebeneinander angeordnet und weisen nach oben - wobei "oben" und "unten" im Rahmen dieser Anmeldung, Angaben bezüglich des Erdbodens sind. Der offenen Seite abgewandt können in den beiden Formhalbschalen 4, 5 Heizvorrichtungen integriert sein.

Während des Herstellungsverfahrens des Rotorblattes werden zunächst die beiden Rotorblatthalbschalen, aus denen das spätere Rotorblatt zusammengesetzt wird, in der Herstellungsform 1 gefertigt. Dazu werden in jede der beiden Formhalbschalen 4, 5, gemäß Fig. 1, zunächst mehrere Schichten, beispielsweise faserhaltige Lagen, Schäume, Balsa, usw. übereinander und/oder nebeneinander gelegt. Die so angeordneten Schichten bilden ein vorzugsweise trockenes Halbzeug aus. Das Halbzeug wird in Verfahren, wie beispielsweise Resin Injection Moulding (RIM-Verfahren) oder Resin Transfer Moulding (RTM-Verfahren) mit einem Harzsystem getränkt.

Nachdem die Rotorblatthalbschalen 20, 21 fertig gestellt und ausgehärtet sind, kann die andere Formhalbschale 5 mit der in der Formhalbschale gefertigten Rotorblatthalbschale mithilfe des anderen Stahlfachwerkes 3 über die eine Formhalbschale 4 verschwenkt werden. Die Herstellungsform 1 wird zugeklappt. Die andere Rotorblattschale hat eine hinreichende Haftung auf der Innenseite der anderen Formhalbschale 5, bzw. ist durch ein s.g. Schließvakuum und/oder zusätzliche mechanische Sicherungen gesichert, sodass sie beim Verschwenken des anderen Stahlfachwerkes 3 nicht aus der anderen Formhalbschale 5 herausfällt.

Einander zugewandte Längsseiten der beiden Stahlfachwerke 2, 3 sind über die Gelenke 6 miteinander verbunden und ermöglichen so das Hin- und Herverschwenken des anderen Stahlfachwerkes 3, während die den Gelenken 6 gegenüberliegenden Längsseiten der beiden Stahlfachwerke 2, 3 mit einer Mehrzahl an Komponenten 7a, 7b mehrerer Verschlüsse 7 sowie zusammenwirkenden Komponenten 8a, 8b von Abstandshaltern 8 versehen sind.

Beim Zusammenklappen der Herstellungsform 1 stoßen ein und ein anderer Stempel 8a, 8b jeweils eines Abstandshalters 8 aufeinander und stützen die beiden Stahlfachwerke 2, 3 an ihrer den Gelenken gegenüber liegenden Längsseiten gegeneinander ab und halten sie auf einem vorbestimmten Abstand d. Die Abstandshalter 8 sind in der Vertikalen vorzugsweise um einige Zentimeter längenverstellbar. Zwischen den Abstandshaltern 8 sind entlang der Längsseiten der beiden Stahlfachwerke und der beiden Formhalbschalen 4, 5 mit den Stahlfachwerken 2, 3 in Berührung stehende erfindungsgemäße Verschlüsse 7 vorgesehen, mit denen die beiden Stahlfachwerke samt der beiden Formhalbschalen gegeneinander verschlossen werden können.

Bevor der klappbare Teil 3, 5 der Herstellungsform 1, also das andere Stahlfachwerk 3 und die andere Formhalbschale 5 auf das positionsfeste Teil, also das eine Stahlfachwerk 2 und die eine Formhalbschale 4, geklappt wird, werden die Ränder der Rotorblatthalbschalen sowie die freien Ränder der in die positionsfeste Rotorblatthalbschale geklebten Stege mit einer Klebmittelschicht versehen. Die Klebmittelschicht 9 kann eine Dicke von 2 bis 4 cm aufweisen. Das Klebmittel 9 ist dicker aufgetragen als die Dicke der später ausgehärteten Klebstoffschicht. Die ausgehärtete Verklebung weist eine Dicke von etwa 1-15 mm auf, sodass nach dem Zuklappen der beiden Formhalbschalen 4, 5 die beiden Formhalbschalen 4, 5 durch die Verschlüsse soweit aufeinander zu gezogen werden müssen, dass die umlaufende Klebmittelschicht von 2 bis 4 cm auf eine Enddicke von etwa 1-15 mm zusammen gedrückt wird. Das herausgedrückte Klebmittel 9 wird außen am Rotorblatt aufgefangen. Das Zusammenziehen der beiden Formhalbschalen wird durch die Verschlüsse 7 ermöglicht, die jeweils einen oder zwei Aktuatoren 10, 11 aufweisen. Die Anzahl der Aktuatoren 10, 11 pro Verschluss 7 hängt von der Bauart des Verschlusses 7 ab.

Die Aktuatoren 10, 11 sind in ihrer Gesamtheit so ausgelegt, dass sie eine hinreichende Kraft aufbringen, um die Formhalbschalen 4, 5 gegen den Widerstand der 2 bis 4 cm dicken zähklebrigen Klebmasseschicht 9 so weit zusammenzudrücken, dass die Klebmasseschicht ihre Enddicke von 1-15 mm erreicht. Die von jedem Aktuator 10, 11 tatsächlich aufzubringende Kraft hängt dabei natürlich von der Größe der Fläche der Klebmasseschicht ab, also insbesondere der Länge des Rotorblattes bzw. der beiden Formhalbschalen 4, 5 sowie auch von der Anzahl der Aktuatoren 10, 11, die entlang der beiden Längskanten der Stahlfachwerke 2, 3 angeordnet sind.

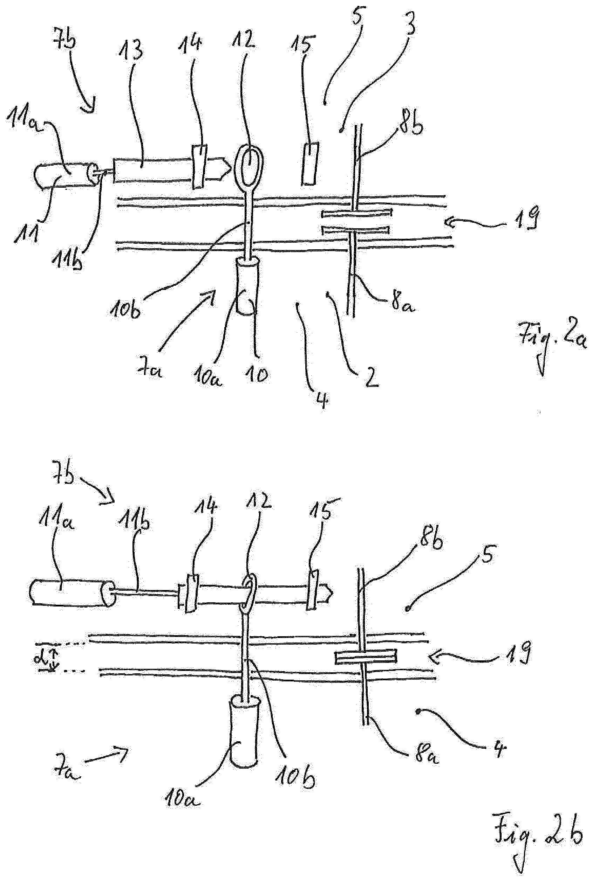

In Fig. 2a ist ein Ausschnitt eines Spaltes der zusammengeklappten, aber noch nicht zusammengedrückten, d.h. offenen Herstellungsform 1 zwischen dem schwenkbaren Formteil 3, 5 und dem positionsfesten Formteil 2, 4 dargestellt. Innenseitig der Ränder der beiden Formhalbschalen 4, 5 ist jeweils ein Rand der zugeordneten Rotorblatthalbschalen angeordnet. Die Ränder der Formhalbschalen 4, 5 und die Ränder der Rotorblatthalbschalen fluchten miteinander.

Auf den Rand der positionsfesten Rotorblatthalbschale ist die Klebmasseschicht 9 aufgetragen, die sich über die gesamte Breite der Ränder der Rotorblatthalbschalen erstreckt und den Rand umlaufend um die Rotorblatthalbschale abdeckt, wobei lediglich der Wurzelbereich, der im Querschnitt senkrecht zur Längsrichtung eine kreisförmige Öffnung aufweist, keine miteinander zu verklebenden Rotorblatthalbschalenränder aufweist.

Der in Fig. 2a dargestellte Verschluss 7 ist zweikomponentig ausgebildet. Der Verschluss weist einen Aktuator 10 einer Verschlusskomponente 7a auf, die an dem einen Stahlfachwerk 2 dauerhaft montiert ist, sowie einen anderen Aktuator 11 einer anderen Verschlusskomponente 7b auf, die an dem anderen Stahlfachwerk 3 dauerhaft montiert ist. Die beiden Verschlusskomponenten 7a, 7b wirken zusammen. In der aufgeklappten Position der Herstellungsform 1 sind die beiden Aktuatoren 10, 11 in ihrer geöffneten Stellung, d. h. der eine Aktuator 10 ist eingezogen, während der andere Aktuator 11 ebenfalls eingezogen ist, angeordnet. Die Aktuatoren 10, 11 sind hier als hydraulische Zylinder 10a, 11a mit Kolbenstange 10b, 11b ausgebildet. Es sind jedoch auch andere Ausführungsformen der Aktuatoren 10, 11 denkbar, es kann sich um elektrische Antriebe, pneumatische Antriebe oder andere Antriebe handeln. Die die Aktuatoren 10, 11 steuernden Hydrauliksysteme mit Flüssigkeitszufuhrleitung und -ableitung und einer Steuerung mit Pumpen usw. sind in der Fig. 2a, 2b nicht dargestellt. Sie sind im Stand der Technik aber bekannt.

Von dem Zylinder 10a geht eine relativ zum Zylinder 10a bewegliche Kolbenstange 10b ab, an deren freien, in Fig. 2a oberen Ende, eine Öse 12 montiert ist. Die Öse 12 ist mit ihrer Öffnungsfläche senkrecht zur Längsrichtung L der Formhalbschalen angeordnet. Die Öse kann auch um die Kolbenstange 10b drehbar angeordnet sein. In einigen Ausführungsformen des Verschlusses dreht sich die Kolbenstange automatisch beim Herein- und Herausfahren, sodass die Öse 12 im eingefahrenen, geöffneten Zustand mit ihrem Öffnungsquerschnitt parallel zur Längsrichtung der Formhalbschalen angeordnet ist und sich die Öse 12 beim Ausfahren der Kolbenstange 10b um 90° entweder im Uhrzeigersinn oder entgegen dem Uhrzeigersinn dreht und im zugeklappten und im geschlossenem Zustand dann mit ihrer Querschnittsfläche senkrecht zur Längsrichtung der Formhalbschalen angeordnet ist. Die Öse 12 wirkt mit einem an einer anderen Kolbenstange 11b des anderen Hydraulikzylinders 11a angeordneten Zapfen 13 zusammen, der in die Öse 12 einführbar ist. Ein Querschnitt über die gesamte Längsausdehnung des Zapfens 13 ist daher kleiner als ein Innenquerschnitt der Öse 12.

In Fig. 2a sind des Weiteren zwei Halterungen 14, 15 des Zapfens 13 dargestellt. Im nicht verriegelten Zustand gemäß Fig. 2a ist der Zapfen 13 lediglich in der ersten Halterung 14 geführt, im verriegelten Zustand, der in Fig. 2b dargestellt ist, wird der Zapfen 13 mittels des anderen Aktuators 11 nach rechts in die verriegelte Stellung verschoben, dabei ist der Zapfen 13 in einer ersten Halterung 14 gelagert und der Zapfen 13 wird beim Verriegelungsvorgang durch die Öse 12 geführt und eine Zapfenspitze in eine zweite Halterung 15, die auf der der ersten Halterung 14 gegenüberliegenden Seite der Öse 12 vorgesehen ist, eingeführt. Der Zapfen 13 ist in einem verriegelten Zustand in zwei Halterungen 14, 15, die fest mit dem anderen Stahlfachwerk 3 verbunden sind, gelagert. Die Lagerung des Zapfens 13 ist insbesondere in Richtung der Erdanziehungskraft zugstabil, sodass durch erneutes Betätigen des einen Aktuators 10 die Öse 12 ein Stück weit in Richtung des Erdbodens gezogen werden kann. Dadurch wird die zugeklappte Herstellungsform 1 geschlossen, d.h. die beiden Formhalbschalen 4, 5 werden weiter zusammengezogen.

Durch gleichzeitiges Einziehen der Ösen 12 aller Verschlüsse 7 entlang der Längsseiten der Stahlfachwerke 2, 3 werden die beiden Ränder der in den Formhalbschalen 4, 5 gelagerten Rotorblatthalbschalen aufeinandergedrückt, bis sie den vorbestimmten Abstand d von 1-15 mm zueinander aufweisen. Während des Zusammenziehens der beiden Formhalbschalen 4, 5 wird das zwischen den beiden Rändern der Formhalbschalen 4, 5 aufgebrachte Klebmittel 9 rotorblattinnenseitig und rotorblattaußenseitig herausgedrückt.

In den Fig. 2a, 2b sind die Abstandshalter 8 mit eingezeichnet. Bei den Abstandshaltern 8 handelt es sich bei dieser Ausführungsform um paarweise zusammenwirkende Stempel 8a, 8b, die jeweils positionsfest an dem Stahlfachwerk 2 bzw. dem anderen Stahlfachwerk 3 montiert sind; beim Zuklappen der Herstellungsform 1 bewegen sich die paarweise zusammenwirkenden Stempel 8a, 8b exakt aufeinander zu bis sie sich berühren. Die Stempel 8a, 8b sind in ihrer Länge einstellbar und so eingestellt, dass sie im geschlossenen Zustand der Herstellungsform 1 genau dann Kontakt miteinander aufweisen und nicht weiter aufeinander zu bewegbar sind, wenn die beiden Ränder der Rotorblatthalbschalen den vorbestimmten Abstand von 1 cm zueinander aufweisen.

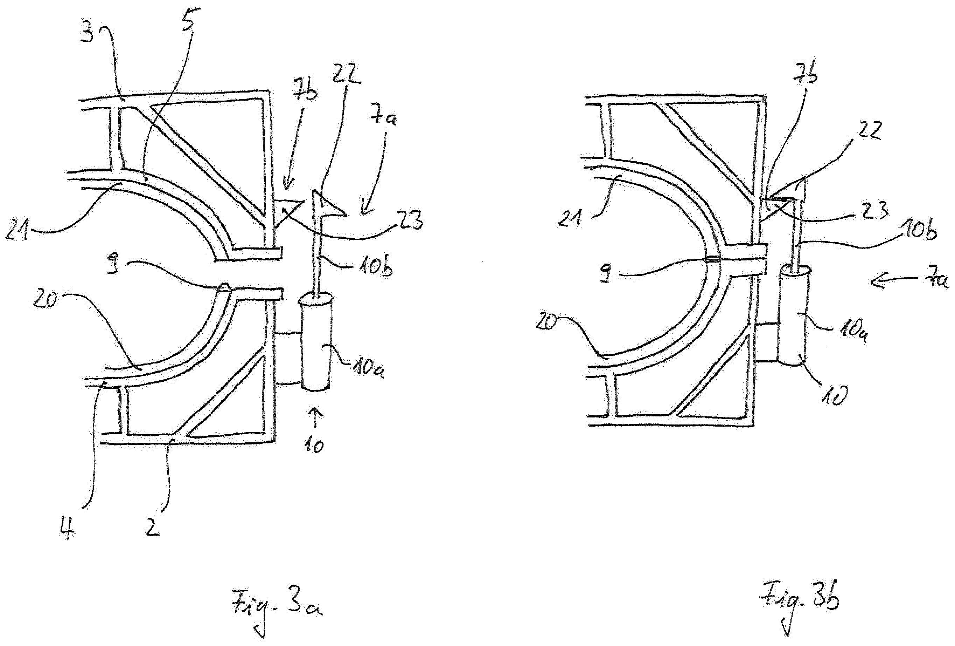

In den Figuren 3a und 3b ist eine zweite Ausführungsform des erfindungsgemäßen Verschlusses 7 dargestellt.

In Fig. 3a ist eine Querschnittansicht der geöffneten Herstellungsform 1 mit einer in der einen Formhalbschale 4 angeordneten Rotorblatthalbschale 20 und in der anderen Formhalbschale 5 angeordneten anderen Rotorblatthalbschale 21 dargestellt. Die geklappten Ränder der beiden Formhalbschalen 4, 5 sind nicht ganz aufeinander geklappt. Der Verschluss 7 ist, wie in der ersten Ausführungsform, automatisch verschließbar. Die am Stahlfachwerk 2 montierte Komponente 7a des Verschlusses 7 weist wiederum einen Zylinder 10a mit einer relativ zum Zylinder 10a beweglichen Kolbenstange 10b auf, an deren freiem Ende ein Ausleger 22 montiert ist, der in dieser Ausführungsform eine im Querschnitt z.B. dreieckige Form hat und in Längsrichtung eine Ausdehnung von mehreren Zentimetern, vorzugsweise 10 bis 15 cm hat. Die andere Verschlusskomponente 7b ist ein an dem anderen Stahlfachwerk 3 montierter Aufleger, der außenseitig vom anderen Stahlfachwerk 3 absteht.

In Fig. 3a ist der Verschluss 7 in der geöffneten Stellung dargestellt. In Fig. 3b ist der Verschluss 7 in der geschlossenen Stellung dargestellt. In der geöffneten Stellung gemäß Fig. 3a weist der Ausleger 22 von der Formhalbschale 4 weg. Nachdem die klappbare Formhalbschale 5 auf die positionsfeste Formhalbschale 4 geklappt wurde, ist ein an dem anderen Stahlfachwerk 3 montierter Aufleger 23 in Richtung der Erdanziehungskraft unterhalb des Auslegers 22 angeordnet. Der Ausleger 22 wird dann mittels der Kolbenstange 10b um 180° gedreht, sodass der Ausleger 22 über dem Aufleger 23 angeordnet ist. Der Aufleger 23 ist wiederum im Querschnitt senkrecht zur Längsrichtung z.B. dreieckig ausgebildet. Eine Auflagefläche des Auslegers 22 und eine Auflagefläche des Auflegers 23 sind parallel zueinander angeordnet und berühren sich im geschlossenen Zustand des Verschlusses 7 gemäß Fig. 3b.

Um die Herstellungsform 1 zu schließen, wird der Aktuator der Verschlusskomponente 7a betätigt und die Kolbenstange 10b eingezogen, sodass der Ausleger 22 und der Aufleger 23 an ihren beiden Auflageflächen miteinander in Berührung gelangen. Der Aktuator 10 wird weiter betätigt und unter Kraft werden die beiden Formhalbschalen 4, 5 zueinander gedrückt, solange bis das zwischen den Rändern der Rotorblatthalbschalen 20, 21 angeordnete Klebmittel, das in einer Schichtdicke von hier ebenfalls 2 bis 4 cm aufgetragen wird, auf eine Schichtdicke von etwa 1-15 mm zusammengedrückt ist.

Grundsätzlich ist es so, dass die Dicke der Klebmasseschichten auch abhängig ist vom herzustellenden Rotorblatt, sodass die Schichtdicken hier nur exemplarisch genannt werden und auch andere Dicken der Klebmittelschicht 9 denkbar sind, sowohl hinsichtlich des anfänglichen Auftrags als auch hinsichtlich der schlussendlichen Dicke auf die sie zusammengedrückt werden.

### Bezugszeichenliste

- 1: Herstellungsform
- 2: Haltekonstruktion, z. B. Stahlfachwerk
- 3: Haltekonstruktion, z. B. Stahlfachwerk
- 4: Formhalbschale
- 5: Formhalbschale
- 6: Gelenke
- 7: Verschlüsse
- 7a: Verschlusskomponente
- 7b: Verschlusskomponente
- 8: Abstandshalter
- 8a: Stempel
- 8b: Stempel
- 9: Klebmittelschicht
- 10: Aktuator
- 10a: Zylinder
- 10b: Kolbenstange
- 11: Aktuator
- 11a: Zylinder
- 11b: Kolbenstange
- 12: Öse
- 13: Zapfen
- 14: Halterung
- 15: Halterung

- 19: Spalt
- 20: Rotorblatthalbschale
- 21: Rotorblatthalbschale
- 22: Ausleger
- 23: Aufleger

- d: Abstand

- L: Längsrichtung

## Patentansprüche

1. Herstellungsform (1) für ein Rotorblatt einer Windenergieanlage mit zwei Formhalbschalen (4, 5) mit jeweils einer offenen Seite und die jeweils in einer Halteeinrichtung (2, 3) angeordnet sind, wobei
die beiden Halteeinrichtungen (2, 3) gelenkig miteinander verbunden sind und von einer geöffneten Position, in der die beiden Formhalbschalen (4, 5) mit ihrer offenen Seite nach oben weisend nebeneinander angeordnet sind, in eine geschlossene Position, in der die beiden Formhalbschalen (4, 5) mit ihrer offenen Seite zueinander weisend übereinander angeordnet sind, hin und her klappbar sind,
wobei eine Mehrzahl an zweikomponentigen Verschlüssen (7) vorgesehen ist, deren eine Komponente (7a) an der einen Halteeinrichtung (2) und deren andere Komponente (7b) an der anderen Halteeinrichtung (3) angeordnet ist, und wobei die beiden Komponenten (7a, 7b) mittels wenigstens eines Aktuators (10, 11) miteinander durch wenigstens zwei voneinander entkoppelte Bewegungen einer der Komponenten (7a, 7b) bzw. der beiden Komponenten (7a, 7b) verschließbar und wieder öffenbar sind und wobei die beiden Formhalbschalen (4, 5) im geschlossenen Zustand einen zwischen ihren Rändern entlanglaufenden Spalt (19) ausbilden und die beiden Halteeinrichtungen (2, 3) mit Abstandshaltern (8) versehen sind und die beiden Formhalbschalen (4, 5) im geschlossenen Zustand durch die Abstandshalter (8) zur Ausbildung des Spaltes (19) voneinander beabstandet sind und der Spalt (19) sich sowohl entlang der Breite als auch entlang der Längsrichtung der Ränder über die gesamte Ausdehnung der übereinander angeordneten Ränder der Formhalbschalen (4, 5) erstreckt.

2. Herstellungsform (1) nach Anspruch 1,
**dadurch gekennzeichnet, dass** die eine Halteeinrichtung (2) als Stahlfachwerk (2) und/oder die andere Halteeinrichtung (3) als anderes Stahlfachwerk (3) ausgebildet ist.

3. Herstellungsform (1) nach Anspruch 1 oder 2,
**dadurch gekennzeichnet, dass** die eine Komponente (7a) eine Öse (12) aufweist, die von einem Aktuator (10) angetrieben ist und die andere Komponente (7b) einen Bolzen aufweist, der über einen anderen Aktuator (11) angetrieben ist und der im geschlossenen Zustand in die Öse (12) eingeführt ist und im geöffneten Zustand aus der Öse (12) herausgeführt ist.

4. Herstellungsform (1) nach Anspruch 1, 2 oder 3,
**dadurch gekennzeichnet, dass** die eine Komponente (7a) einen an dem einen Aktuator (10) angeordneten drehbaren Ausleger (22) aufweist, der im geschlossenen Zustand zu einer anderen Formhalbschale (5) weist und auf einer an dem anderen Stahlfachwerk (3) angeordneten Auflage aufliegt und im geöffneten Zustand von der anderen Formhalbschale (5) weg weist.

5. Herstellungsform (1) nach einem der vorstehenden Ansprüche,
**dadurch gekennzeichnet, dass** der eine Aktuator (10) einen in einer Kulisse geführten Stift aufweist, an dessen freiem Ende die Öse (12) oder der Ausleger (22) angeordnet sind.

6. Herstellungsform (1) nach einem der vorstehenden Ansprüche,
**dadurch gekennzeichnet, dass** der andere Aktuator (11) einen in einer anderen Kulisse geführten anderen Stift aufweist, an dessen freiem Ende der Bolzen angeordnet ist.

7. Herstellungsform (1) nach einem der vorstehenden Ansprüche,
**dadurch gekennzeichnet, dass** die Abstandshalter (8) jeweils einen an dem Stahlfachwerk (2) und einen anderen an dem anderen Stahlfachwerk (3) montierten Stempel (8a, 8b) aufweisen, die im geschlossenen Zustand paarweise aneinanderliegen.

8. Verfahren zur Herstellung eines Rotorblattes einer Windenergieanlage, indem
in einer Herstellungsform (1) mit
zwei Formhalbschalen (4, 5) mit jeweils einer offenen Seite in jeder der zwei Formhalbschalen (4, 5) je eine Rotorblatthalbschale (20, 21) gefertigt wird,
jede der beiden Formhalbschalen (4, 5) in jeweils einer Halteeinrichtung (2, 3) angeordnet ist und die beiden Halteeinrichtungen (2, 3) gelenkig miteinander verbunden sind und die beiden Halteeinrichtungen (2, 3) von einer geöffneten Position, in der die beiden Formhalbschalen (4, 5) mit ihrer offenen Seite nach oben weisend nebeneinander angeordnet sind, in eine geschlossene Position, in der die beiden Formhalbschalen (4, 5) mit ihrer offenen Seite zueinanderweisend übereinander angeordnet sind, geklappt werden,
wobei eine Mehrzahl an zweikomponentigen Verschlüssen (7) vorgesehen ist, deren eine Komponente (7a) an der einen Halteeinrichtung (2) und deren andere Komponente (7b) an der anderen Halteeinrichtung (3) angeordnet ist, und die beiden Komponenten (7a, 7b) jedes Verschlusses (7) mittels wenigstens eines Aktuators (10, 11) miteinander verschlossen werden und eine der Komponenten (7a, 7b) oder beide Komponenten (7a, 7b) wenigstens zwei voneinander entkoppelte Bewegungen ausführen und wobei die beiden Halteeinrichtungen (2, 3) mit Abstandshaltern (8) versehen werden und die beiden Formhalbschalen (4, 5) im geschlossenen Zustand durch die Abstandshalter (8) einen zwischen ihren Rändern entlanglaufenden Spalt (19) ausbilden, der sich sowohl entlang der Breite als auch entlang der Längsrichtung der Ränder über die gesamte Ausdehnung der übereinander angeordneten Ränder der Formhalbschalen (4, 5) erstreckt.

9. Verfahren nach Anspruch 8,
**dadurch gekennzeichnet, dass** eine an der einen Komponente (7a) vorgesehene Öse (12) in eine Richtung translatorisch verfahren wird, ein an der anderen Komponente (7b) angeordneter Bolzen translatorisch verfahren wird, bis der Bolzen durch die Öse (12) hindurchragt, und die Öse (12) in eine entgegengesetzte Richtung translatorisch verfahren wird.

10. Verfahren nach Anspruch 8,
**dadurch gekennzeichnet, dass** ein an der einen Komponente (7a) angeordneter Ausleger (22) rotiert wird, bis er über einem an der anderen Komponente (7b) angeordneten Aufleger (23) positioniert ist, und der Ausleger (22) dann in die Richtung des Auflegers (23) translatorisch verfahren wird.

## Claims

1. A production mold (1) for a rotor blade of a wind turbine, having
two mold half-shells (4, 5) each with an open side and each arranged in a retaining device (2, 3), wherein
the two retaining devices (2, 3) are connected to one another in an articulated manner and can be swung back and forth from an open position, in which the two mold half-shells (4, 5) are arranged one beside the other with their open sides oriented upward, into a closed position, in which the two mold half-shells (4, 5) are arranged one above the other with their open sides oriented toward one another, wherein a plurality of two-component closures (7) is provided, of which a one component (7a) is arranged on the one retaining device (2) and of which another component (7b) is arranged on the other retaining device (3), and wherein the two components (7a, 7b) can be closed and opened again by means of at least one actuator (10, 11), by way of at least two decoupled movements of one of the components (7a, 7b) or of the two components (7a, 7b) and wherein the two mould half-shells (4, 5), in the closed state, form a gap (19) which runs along between their peripheries and the both retaining devices (2, 3) are provided with spacers (8) and the two mould half-shells (4, 5), in the closed state, are spaced apart from each other by the spacers (8) for forming the gap (19) and the gap (19) extends both along the width and along the longitudinal direction of the peripheries over the whole extension of the peripheries of the mould half-shells (4, 5) being arranged one upon the other.

2. The production mold (1) as claimed in claim 1,
wherein the one retaining device (2) is designed in the form of a steel framework (2) and/or the other retaining device (3) is designed in the form of another steel framework (3).

3. The production mold (1) as claimed in claim 1 or 2,
wherein the one component (7a) has an eyelet (12), which is driven by an actuator (10), and the other component (7b) has a bolt, which is driven via another actuator (11) and which, in the closed state, is introduced into the eyelet (12) and, in the open state, is guided out of the eyelet (12).

4. The production mold (1) as claimed in claim 1, 2 or 3,
wherein the one component (7a) has a rotatable extension arm (22), which is arranged on the one actuator (10) and, in the closed state, is oriented toward the other mold half-shell (5) and rests on a bearing means arranged on the other steel framework (3) and, in the open state, is oriented away from the other mold half-shell (5).

5. The production mold (1) as claimed in one of the preceding claims,
wherein the one actuator (10) has a pin which is guided in a guide means and at the free end of which the eyelet (12) or the extension arm (22) is arranged.

6. The production mold (1) as claimed in one of the preceding claims,
wherein the other actuator (11) has another pin, which is guided in another guide means and at the free end of which the bolt is arranged.

7. The production mold (1) as claimed in one of the preceding claims,
wherein the spacers (8) each have a pressure-exerting element (8a, 8b), one mounted on the steel framework (2) and another mounted on the other steel framework (3), said pressure-exerting elements butting against one another in pairs in the closed state.

8. A method of producing a rotor blade of a wind turbine, wherein,
in a production mold (1) having
two mold half-shells (4, 5) each with an open side,
a respective rotor-blade half-shell (20, 21) is produced in each of the two mold half-shells (4, 5),
each of the two mold half-shells (4, 5) is arranged in a respective retaining device (2, 3) and the two retaining devices (2, 3) are connected to one another in an articulated manner and the two retaining devices (2, 3) are swung from an open position, in which the two mold half-shells (4, 5) are arranged one beside the other with their open sides oriented upward, into a closed position, in which the two mold half-shells (4, 5) are arranged one above the other with their open sides oriented toward one another,
wherein a plurality of two-component closures (7) is provided, of which the one component (7a) is arranged on the one retaining device (2) and of which the other component (7b) is arranged on the other retaining device (3), and the two components (7a, 7b) of each closure (7) are closed with one another by means of at least one actuator (10, 11) and one of the components (7a, 7b) or the two components (7a, 7b) execute at least two decoupled movements and wherein the two retaining devices (2, 3) are provided with spacers (8) and the two mould half-shells (4, 5), in the close state, form a gap by the spacers (8) which runs along between their peripheries which extends both along the width and along the longitudinal direction of the peripheries over the whole extension of the peripheries of the mould half-shells (4, 5) being arranged one upon the other.

9. The method as claimed in claim 10,
wherein an eyelet (12), which is provided on the one component (7a), is displaced in a translatory manner in one direction, a bolt, which is arranged on the other component (7b), is displaced in a translatory manner until the bolt projects through the eyelet (12), and the eyelet (12) is displaced in a translatory manner in an opposite direction.

10. The method as claimed in claim 10,
wherein an extension arm (22), which is arranged on the one component (7a), is rotated until it is positioned above a bearing means (23), which is arranged on the other component (7b), and the extension arm (22) is then displaced in a translatory manner in the direction of the bearing means (23).

## Revendications

1. Moule de fabrication (1) pour une pale de rotor d'une éolienne avec deux demies coques de moule (4, 5) avec un côté ouvert chacune et qui sont placées chacune dans un dispositif de maintien (2, 3), cependant que les deux dispositifs de maintien (2, 3) sont reliés de manière articulée l'un à l'autre et sont rabattables en va-et-vient d'une position ouverte dans laquelle les deux demies coques de moule (4, 5) sont placées l'une à côté de l'autre avec leur côté ouvert tourné vers le haut à une position fermée dans laquelle les deux demies coques de moule (4, 5) sont placées l'une au-dessus de l'autre avec leur côté ouvert tourné l'un vers l'autre, cependant qu'il est prévu une pluralité de fermetures à deux composants (7) dont l'un des composants (7a) est placé sur l'un des dispositifs de maintien (2) et dont l'autre composant (7b) est placé sur l'autre dispositif de maintien (3) et cependant que les deux composants (7a, 7b) peuvent être fermés et ouverts à nouveau au moyen du au moins un actionneur (10, 11) l'un avec l'autre par au moins deux mouvements découplés l'un de l'autre de l'un des composants (7a, 7b) ou des deux composants (7a, 7b) et cependant que les deux demies coques de moule (4, 5) forment, à l'état fermé, une fente (19) qui longe entre leurs bords et les deux dispositifs de maintien (2, 3) étant pourvus d'espaceurs (8) et les deux demies coques de moule (4, 5) étant espacées l'une de l'autre, à l'état fermé, par les espaceurs (8) pour former la fente (19) et la fente (19) s'étendant aussi bien le long de la largeur que le long du sens longitudinal des bords sur toute l'étendue des bords superposés des demies coques de moule (4, 5).

2. Moule de fabrication (1) selon la revendication 1, **caractérisé en ce que** l'un des dispositifs de maintien (2) est configuré comme un treillis en acier (2) et/ou l'autre dispositif de maintien (3) est configuré comme un autre treillis en acier (3).

3. Moule de fabrication (1) selon la revendication 1 ou 2, **caractérisé en ce que** l'un des composants (7a) présente un œillet (12) qui est entraîné par un actionneur (10) et que l'autre composant (7b) présente un boulon qui est entraîné par un autre actionneur (11) et qui, à l'état fermé, est entré dans l'œillet (12) et, à l'état ouvert, est sorti de l'œillet (12).

4. Moule de fabrication (1) selon la revendication 1, 2 ou 3, **caractérisé en ce que** l'un des composants (7a) présente une flèche (22) rotative, placée sur l'un des actionneurs (10), qui, à l'état fermé, est tournée vers une autre demie coque de moule (5) et repose sur un support placé sur l'autre treillis en acier (3) et, à l'état ouvert, est détourné de l'autre demie coque de moule (5).

5. Moule de fabrication (1) selon l'une des revendications précédentes, **caractérisé en ce que** l'un des actionneurs (10) présente un goujon guidé dans une coulisse à l'extrémité libre duquel l'œillet (12) ou la flèche est placée.

6. Moule de fabrication (1) selon l'une des revendications précédentes, **caractérisé en ce que** l'autre actionneur (11) présente un autre goujon guidé dans une autre coulisse à l'extrémité libre duquel le boulon est placé.

7. Moule de fabrication (1) selon l'une des revendications précédentes, **caractérisé en ce que** les espaceurs (8) présentent chacun un poinçon (8a, 8b) monté sur le treillis en acier (2) et un autre monté sur l'autre treillis en acier (3) qui, à l'état fermé, sont juxtaposés par paires.

8. Procédé pour la fabrication d'une pale de rotor d'éolienne, cependant qu'une demie coque de pale de rotor (20, 21) est fabriquée dans un moule de fabrication (1) avec deux demies coques de moule (4, 5) ayant chacune un côté ouvert dans chacune des deux demies coques de moule (4, 5), que chacune des deux demies coques de moule (4, 5) est placée respectivement dans un dispositif de maintien (2, 3) et que les deux dispositifs de maintien sont reliés de manière articulée l'un à l'autre et que les deux dispositifs de maintien (2, 3) sont rabattus d'une position ouverte dans laquelle les deux demies coques de moule (4, 5) sont placées l'une à côté de l'autre avec leur côté ouvert tourné vers le haut à une position fermée dans laquelle les deux demies coques de moule (4, 5) sont placées l'une au-dessus de l'autre avec leur côté ouvert tourné l'un vers l'autre, cependant qu'il est prévu une pluralité de fermetures à deux composants (7) dont l'un des composants (7a) est placé sur l'un des dispositifs de maintien (2) et dont l'autre composant (7b) est placé sur l'autre dispositif de maintien (3) et que les deux composants (7a, 7b) de chaque fermeture (7) sont fermés l'un avec l'autre au moyen d'au moins un actionneur (10, 11) et l'un des composants (7a, 7b) ou les deux composants (7a, 7b) exécutent au moins deux mouvements découplés l'un de l'autre et cependant que les deux dispositifs de maintien (2, 3) sont pourvus d'espaceurs (8) et que les deux demies coques de moule (4, 5) forment, à l'état fermé, par les espaceurs (8) une fente (19) qui longe entre leurs bords qui s'étend aussi bien le long de la largeur que le long du sens longitudinal des bords sur toute l'étendue des bords superposés des demies coques de moule (4, 5).

9. Procédé selon la revendication 8, **caractérisé en ce qu'**un œillet (12) prévu sur l'un des composants (7a) est déplacé par translation dans une direction, qu'un boulon placé sur l'autre composant (7b) est déplacé par translation jusqu'à ce que le boulon fasse saillie à travers l'œillet (12) et que l'œillet (12) soit déplacé par translation dans une direction opposée.

10. Procédé selon la revendication 8, **caractérisé en ce qu'**une flèche (22) placée sur l'un des composants (7a) est en rotation jusqu'à ce qu'elle soit positionnée au-dessus d'un moyen de support (23) placée sur l'autre composant (7b) et que la flèche (22) soit alors déplacée par translation dans la direction du moyen de support (23).
